Europäisches Patentamt

European Patent Office

Office européen des brevets

(19)

(11) **EP 1 364 258 B1**

(12) **FASCICULE DE BREVET EUROPEEN**

(45) Date de publication et mention
de la délivrance du brevet:
**11.05.2005 Bulletin 2005/19**

(21) Numéro de dépôt: **02706841.0**

(22) Date de dépôt: **12.02.2002**

(51) Int Cl.⁷: **G05B 13/02**, G05B 13/04

(86) Numéro de dépôt international:
**PCT/FR2002/000516**

(87) Numéro de publication internationale:
**WO 2002/071162 (12.09.2002 Gazette 2002/37)**

(54) **PROCEDE DE CONTROLE ET DE COMMANDE D'UN PROCESSUS TECHNIQUE**

VERFAHREN ZUR STEUERUNG UND/ODER REGELUNG EINES TECHNISCHEN PROZESSES

METHOD FOR CONTROLLING AND DRIVING A TECHNICAL PROCESS

(84) Etats contractants désignés:
**AT BE CH CY DE DK ES FI FR GB GR IE IT LI LU
MC NL PT SE TR**

(30) Priorité: **01.03.2001 FR 0102788**

(43) Date de publication de la demande:
**26.11.2003 Bulletin 2003/48**

(73) Titulaire: **USINOR
92800 Puteaux (FR)**

(72) Inventeur: **MONARI, Gaétan
F-13430 Eyguieres (FR)**

(74) Mandataire: **Lagrange, Jacques et al
Cabinet Lavoix
2, place d'Estienne d'Orves
75441 Paris Cedex 09 (FR)**

(56) Documents cités:
**US-A- 4 639 853        US-A- 4 861 960
US-A- 5 859 773**

**Description**

La présente invention concerne un procédé de contrôle et de commande d'un processus technique s'exécutant dans le temps soit de façon continue soit de façon discontinue, le processus étant en particulier le soudage par points d'un assemblage de tôles.

Les processus techniques qui peuvent être contrôlés ot commandés par des régulations sont très divers et se retrouvent dans toutes les industries. D'une façon générale, un processus transforme un objet, caractérisé par des grandeurs qui sont des grandeurs d'entrée pour le processus, en un autre objet caractérisé par des grandeurs qui sont des grandeurs de sortie pour le processus. L'exécution du processus peut être commandée par des grandeurs de consigne correspondant à des paramètres de réglage fixés par un opérateur ou par une régulation. D'une façon générale également, on souhaite qu'au moins une grandeur de sortie reste voisine d'une valeur visée, ont dit alors qu'on contrôle cette grandeur. Pour atteindre cet objectif, obtenir une grandeur de sortie ayant une valeur voisine de la valeur visée, on ajuste les grandeurs de consigne. L'ajustement des valeurs de consigne à partir de la mesure de grandeurs caractéristiques du processus, ainsi que l'utilisation de ces mesures pour surveiller l'exécution de celui-ci, constitue le procédé de contrôle et de commande du processus. Il convient de noter que, si les grandeurs de sortie sont des variables indépendantes les unes des autres, on ne peut contrôler qu'une et une seule de ces grandeurs. On supposera donc par la suite qu'on ne contrôle qu'une seule grandeur de sortie, même si le processus peut être caractérisé par plusieurs grandeurs de sortie indépendantes les unes des autres. Par la suite, la grandeur de sortie à contrôler pourra aussi être appelée « résultat ». Enfin, l'exécution du processus peut être, en général, caractérisée par des grandeurs liées aux phénomènes mis en jeu par le processus; ces grandeurs ne sont ni des grandeurs d'entrée, ni des grandeurs de sortie.

Une grandeur d'entrée ou de sortie, ou toute autre grandeur associée au processus, peut ou non être mesurée et, si elle peut être mesurée, la mesure peut ou non être faite en temps réel sans perturber le processus. Par la suite, on appellera :

- « grandeur mesurable » une grandeur qu'on peut mesurer, c'est-à-dire à laquelle on peut faire correspondre une valeur numérique ; une telle grandeur n'est pas nécessairement mesurable en temps réel.
- « grandeur observable » une grandeur mesurable qui peut être mesurée directement sur le processus ou sur le produit directement issu du processus, en temps réel.

On connaît par exemple des procédés de contrôle et de commande d'un processus qui consistent à mesurer la grandeur de sortie à contrôler, à comparer cette mesure à la valeur visée, puis, en utilisant une loi de commande, à modifier les grandeurs de consigne. Un tel procédé suppose qu'on puisse mesurer en temps réel la grandeur de sortie considérée.

Dans une variante du procédé précédent, la grandeur à contrôler n'est pas mesurable en temps réel mais est corrélée de façon connue à une autre grandeur de sortie qui, elle, est mesurable en temps réel, voir par exemple le brevet US-A-4 861 960. Dans ce cas, on remplace la grandeur à contrôler par la grandeur de sortie mesurable et on régule cette dernière grandeur.

On connaît également des procédés de contrôle et de commande d'un processus qui consistent à mesurer les grandeurs d'entrée et à calculer les grandeurs de consigne en utilisant un modèle dont les variables sont les grandeurs d'entrée mesurées et la valeur de sortie visée. Ce modèle constitue alors la loi de commande ; il ne permet pas de calculer de valeur prévisionnelle pour la grandeur de sortie à contrôler. Un tel procédé suppose qu'on puisse mesurer les grandeurs d'entrée et qu'on dispose d'un modèle adéquat.

On connaît aussi des procédés de contrôle et de commande d'un processus qui consistent à mesurer les grandeurs d'entrée, à calculer à l'aide d'un modèle prédictif, dont les variables sont les grandeurs d'entrée et les grandeurs de consigne, une estimation de la valeur de la grandeur de sortie à contrôler, à comparer cette estimation à la valeur visée et à utiliser cette comparaison pour modifier les grandeurs de consigne en utilisant une loi de commande. Un tel procédé suppose qu'on puisse mesurer en temps réel les grandeurs d'entrée et qu'on dispose d'un modèle prédictif adéquat.

On connaît enfin des procédés de contrôle et de commande d'un processus qui utilisent un modèle permettant de calculer, à partir de la grandeur de sortie à contrôler et des grandeurs de consigne, la valeur d'une grandeur de sortie, facile à mesurer, différente de la grandeur à contrôler, mais corrélée étroitement à celle-ci. Dans ce procédé, à partir de la valeur visée pour la grandeur de sortie à contrôler et des grandeurs de consigne, on calcule une valeur visée pour la grandeur de sortie facile à mesurer, puis on compare la valeur mesurée de cette grandeur à la valeur visée, et à partir de cette comparaison, on modifie les grandeurs de consigne en utilisant une loi de commande. Ce procédé suppose notamment qu'on connaisse au moins une grandeur de sortie facile à mesurer, qui puisse être calculée à partir d'un modèle dont les variables sont la grandeur de sortie à contrôler et des grandeurs de consigne.

Cependant, il existe des processus pour lesquels aucun de ces procédés de contrôle et de commande n'est applicable. C'est en particulier le cas du soudage par points d'un assemblage de tôles. En effet, dans ce processus, le résultat à obtenir ne peut être mesuré que par un essai destructif et ne peut donc pas être utilisé pour contrôler et commander le processus en continu. D'autre part, le résultat dépend non seulement des grandeurs d'entrée et de consigne, mais également de l'usure du dispositif utilisé pour effectuer le soudage. Or, on ne connaît pas de moyen fiable pour mesurer l'usure du dispositif. On ne peut donc prévoir à partir des grandeurs d'entrée et de consigne, ni la qualité de la soudure, ni tout autre grandeur de sortie qui, à elle seule, serait représentative de la qualité de la soudure. Enfin, on ne connaît pas une grandeur de sortie corrélée étroitement au résultat à contrôler.

Il existe donc des processus, et le soudage par points en est un exemple, dont les grandeurs d'entrée, les grandeurs de sortie et les consignes ne permettent pas de mettre en oeuvre les procédés de régulation connus.

Le but de la présente invention est de remédier à cet inconvénient en proposant un moyen pour contrôler et commander en continu un processus technique tel que le soudage par points dans lequel il n'est pas possible d'observer (au sens défini ci-dessus) le résultat obtenu, et pour lequel ce résultat ne peut pas être prévu à partir des seules mesures des grandeurs d'entrée mesurables ou d'une seule grandeur de sortie mesurable.

A cet effet, l'invention a pour objet un procédé de contrôle et de commande d'un processus technique s'exécutant dans le temps, soit de façon continue soit de façon discontinue, en appliquant à chaque instant t des consignes $\{C_1(t),...C_n(t)\}$, conduisant à un résultat $R(t)$ mesurable mais non observable qu'on souhaite maintenir proche d'une valeur visée $R_v$, et engendrant une pluralité de grandeurs observables dont au moins deux sont indépendantes $\{G_1(t),....G_m(t)\}$, selon lequel :

- on mesure au moins deux grandeurs observables indépendantes $G_1(t),....G_p(t)$,
- à l'aide d'un modèle prédictif M, ou d'un comité de modèles, dont les variables d'entrée comportent les au moins deux grandeurs observables indépendantes et éventuellement au moins une consigne $C_1(t),...C_q(\mathbf{t})$, on calcule une estimation $R_{es}(t)=M(G_1(t),....G_p(t) , C_1(t),...C_q(t) )$ du résultat $R(t)$,
- à l'aide d'une loi de commande L dont la variable d'entrée est le résultat estimé $R_{es}(t)$ et le résultat visé $R_v$, on calcule de nouvelles consignes $\{C_1(t+1),...C_n(t+1)\} = L(R_{es}(t), R_v)$ applicables pour l'instant t+1,
- et on remplace les consignes $\{C_1(t),...C_n(t)\}$ par les consignes $\{C_1(t+1),...C_n(t+1)\}$,

Le modèle prédictif M peut être un modèle d'ajustement statistique dépendant de paramètres $\{\theta_1,...\theta_p\}$, qui constituent un vecteur paramètres θ, ajustés sur une base d'apprentissage $B_{ap}$ constituée de l'ensemble des consignes, des mesures des grandeurs observables et de la mesure du résultat pour une pluralité d'exécutions successives du processus technique.

Pour déterminer le modèle M, on peut, par exemple, procéder de la façon suivante :

- on choisit une structure de modèle dépendant d'un vecteur paramètre θ,
- on choisit une fonction de coût J ayant par exemple une forme quadratique,
- avec la base d'apprentissage, on calcule une succession de modèles ajustés $M_{a,k}$ correspondant à différents vecteurs paramètre $\theta_k$ de dimension $q_k$ qui minimisent, globalement ou localement, la fonction coût sur la base d'apprentissage,
- pour chaque modèle $M_{a,k}$ , on calcule les coefficients $h_{ii}$ de chacun des exemples de la base d'apprentissage, et on calcule le score généralisé du modèle $M_{a,k}$ :

$$E (\theta_{a,k}) = \Sigma_{i=1,N} [(M_{a,k}(x^i ; \theta_{a,k}) - R_i)/(1 - h_{ii})]^2$$

- et on calcule une grandeur $\mu (\theta_{a,k}) = (N.q_k)^{-1/2} \Sigma_{i=1 \text{ à } N} h_{ii}^{1/2}$ et on choisit le modèle $M_{a,k}$ ayant le plus grand $\mu (\theta_{a,k})$ parmi les modèles ayant les plus petits $E (\theta_{a,k})$ ; ce modèle est le modèle optimal $M_{a,opt}$.

De préférence :

- on détermine pour la mesure du résultat R un intervalle de dispersion $[\sigma_{min}, \sigma_{max}]$ de l'écart type de l'erreur de mesure,
- et on ajuste les paramètres $\{\theta_1,...\theta_p\}$ du modèle prédictif M de telle sorte que, sur une base de test $B_{test}$, il ait un score S tel que $\sigma_{min} < S < \sigma_{max}$, la base de test étant constituée de l'ensemble des consignes, des mesures des grandeurs observables et de la mesure du résultat pour une pluralité d'exécutions successives du processus technique, différente de la base d'apprentissage.

Pour ajuster les paramètres $\{\theta_1,...\theta_p\}$ du modèle prédictif M, on peut choisir une première base d'apprentissage $B_{ap}$ et une première base de test $B_{test}$ et procéder comme suit : à l'aide de ladite première base d'apprentissage on détermine une première estimation des paramètres $\{\theta_1,...\theta_p\}$, de telle sorte que le score du modèle M pour la base d'apprentissage soit compris dans l'intervalle de dispersion $[\sigma_{min}, \sigma_{max}]$, puis, en utilisant dans le modèle M cette première estimation des paramètres, à l'aide de la première base de test $B_{test}$ , on évalue le score S qu'on compare à l'intervalle de dispersion $[\sigma_{min}, \sigma_{max}]$, si S est à l'intérieur dudit intervalle de dispersion, on considère que l'estimation des paramètres est satisfaisante, dans le cas contraire, on complète la base d'apprentissage $B_{ap}$ avec des exemples issus de la première base de test pour constituer une nouvelle base d'apprentissage, éventuellement on complète la base de test et on détermine à nouveau les paramètres $\{\theta_1,...\theta_p\}$ à l'aide de la nouvelle base d'apprentissage et le score S sur la nouvelle base de test, et on poursuit les itérations jusqu'à ce que le score S soit compris dans l'intervalle de dispersion $[\sigma_{min}, \sigma_{max}]$.

Pour compléter la base d'apprentissage avec des exemples issus de la base de test on peut:

- fixer un seuil d'intervalle de confiance Sk pour les prédictions du modèle,
- calculer l'intervalle de confiance Ik de la prédiction du modèle M, pour chacun des exemples de la base de test
- et introduire dans la base d'apprentissage tous les exemples de la base de test dont l'intervalle de confiance Ik est supérieur à Sk.

Au cours de l'exploitation du processus, on peut mesurer au moins un résultat et les grandeurs observables correspondantes de façon à déterminer au moins un exemple supplémentaire qu'on ajoute à la base d'apprentissage et, avec la nouvelle base d'apprentissage ainsi obtenue, évaluer la performance du modèle et, si nécessaire, ajuster les paramètres du modèle.

Le modèle M est, par exemple, un réseau de neurones.

Le processus technique, peut, en particulier, être le soudage par points de tôles.

Dans ce cas, le résultat R est, par exemple, le diamètre $\Phi$ du bouton de soudage et les consignes $C_1,...C_n$ , sont la force de soudage $F_s$, l'intensité de soudage $I_s$, le temps de soudage $\Delta t_s$ et le temps de forgeage $\Delta t_f$. Les grandeurs observables sont, par exemple, l'énergie électrique totale $E_t$, la dilatation maximale en cours de soudage $\Delta z_s$ et la contraction maximale pendant la phase de forgeage $\Delta z_f$.

La loi de commande L peut être définie de la façon suivante:

- on choisit une valeur minimale $\Phi_{min}$ et une valeur maximale $\Phi_{max}$ pour le diamètre du bouton de soudage,
- on choisit un nombre qm,
- on effectue la moyenne glissante $\Phi_{mg}$ des qm dernières prédictions du diamètre du bouton de soudage $\Phi$,
- si $\Phi_{mg} > \Phi_{max}$ , on diminue la consigne Ic d'intensité de soudage, si $\Phi_{min} \leq \Phi_{mg} \leq \Phi_{max}$ on ne modifie pas la consigne Ic d'intensité de soudage, si $\Phi_{mg} < \Phi_{min}$ on augmente la consigne Ic d'intensité de soudage.

On peut, en outre, fixer une valeur $R_0 < R_{min}$, et, si la dernière prédiction du diamètre du bouton de soudage $\Phi$ est inférieure à $\Phi_0$, on augmente la consigne Ic d'intensité de soudage.

On peut, également, fixer un incrément $\Delta Ic$ d'intensité de soudage, et, lorsqu'on diminue ou augmente la consigne Ic d'intensité de soudage, on soustrait ou on ajoute à Ic l'incrément $\Delta Ic$.

De préférence, ce procédé est mis en oeuvre par un ordinateur.

L'invention va maintenant être décrite plus en détails pour l'exemple du soudage par points, en regard des figures annexées dans lesquelles :

- la Figure 1 est un schéma de principe du soudage par points de deux tôles,
- la Figure 2 est une vue schématique en coupe d'un bouton de soudage par points,
- la Figure 3 est une vue schématique en coupe d'un bouton de soudage après arrachement,
- la Figure 4 est un schéma montrant l'évolution du diamètre du bouton de soudage en fonction de l'intensité de soudage pour deux états d'usure des électrodes de soudage,
- la Figure 5 est un schéma montrant l'évolution de la consigne d'intensité de soudage en fonction du nombre de soudures réalisées,
- la Figure 6 représente de façon schématique l'évolution de plusieurs grandeurs caractéristiques du soudage au cours de la réalisation d'un point de soudure.

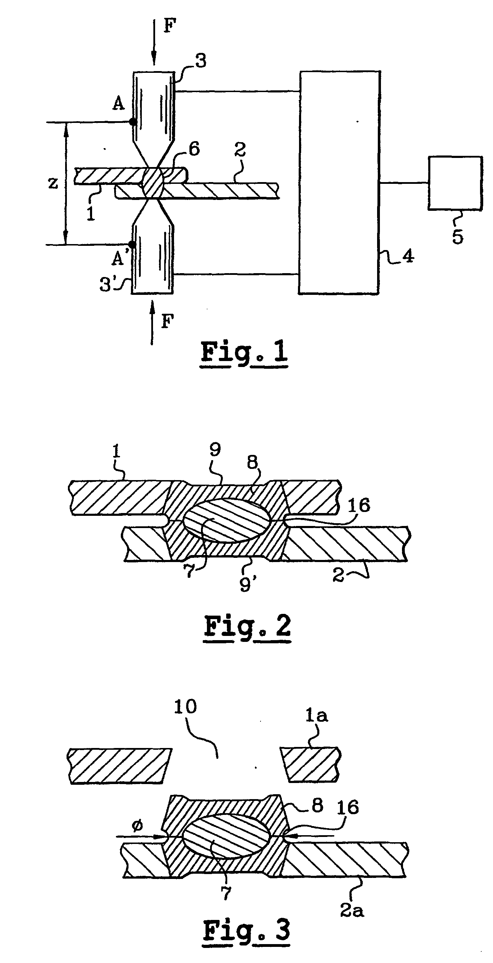

Le soudage par points est un procédé d'assemblage de deux tôles métalliques, connu en lui même. Deux tôles 1 et 2 (figure 1) sont disposées l'une sur l'autre dans une zone de recouvrement marginal et serrées entre deux électrodes 3 et 3' reliées à un module de commande 4 comportant un transformateur relié à une source d'électricité 5. A l'aide des électrodes, on fait passer, pendant un temps limité, un courant électrique d'intensité Ic à travers la zone de contact 6 des tôles située entre les électrodes. Le passage du courant électrique dans la zone de contact 6 provoque un échauffement du métal qui fait fondre celui-ci en formant un noyau fondu 7 (figure 2) entouré d'une zone affectée par la chaleur 8 qui comporte des indentations 9 et 9' provoquées par la pression des électrodes. Après le passage du courant électrique, le noyau fondu 7 se solidifie et assure une liaison entre les deux tôles. En général, pour assembler les deux tôles, on réalise une pluralité de points de soudure disposés le long de la zone de recouvrement des tôles.

L'ensemble, constitué par la zone fondue puis solidifiée 7 et la zone affectée par la chaleur 8, est appelé bouton de soudage.

La qualité du soudage, c'est-à-dire la résistance mécanique du bouton de soudage, est évaluée par le diamètre moyen de celui-ci. Pour mesurer ce diamètre moyen, on prélève une portion de tôles soudées par points contenant un bouton de soudage, et on sépare les deux morceaux de tôle par arrachement. On obtient alors (figure 3) une portion de tôle 1a contenant un trou 10 à peu près rond et une portion 2a contenant le bouton 8. Pour mesurer le diamètre $\Phi$ du bouton, on mesure le plus grand et le plus petit diamètre du bouton et on fait la moyenne arithmétique de ces deux mesures. Cette mesure est faite dans la gorge 16 qui se situe à peu près à l'interface entre les deux tôles. Ainsi, la qualité du soudage est une grandeur mesurable, la mesure de cette qualité étant le diamètre du bouton de soudage. A noter que la qualité du soudage peut également être mesurée par d'autres moyens, par exemple, par la mesure de l'effort d'arrachement du bouton de soudage ; l'homme du métier sait déterminer ces méthodes de mesure de la qualité du bouton de soudage. Mais, cette grandeur n'est pas observable au sens qui a été défini ci-dessus, puisque pour la mesurer il faut détruire la soudure, et par conséquent, il n'est pas possible de la mesurer en temps réel, c'est-à-dire au fur et à mesure que la soudure est réalisée.

Le processus de soudage comporte les étapes suivantes :

- mise en place des tôles entre les électrodes,
- accostage, opération consistant à rapprocher les électrodes de tôles et à serrer progressivement en faisant monter la force de serrage jusqu'à une valeur nominale,
- fusion du noyau fondu par passage du courant pendant un temps déterminé,
- forgeage par maintien de la force de serrage pendant un temps déterminé,
- relâchement du serrage par écartement des électrodes.

Chacune de ces étapes dure une fraction de secondes ou une seconde environ, le cycle complet durant quelques secondes.

La qualité du soudage, pour des tôles d'épaisseur et de nature données (nature du métal, présence ou non de revêtement, etc.), dépend des paramètres suivants :

- force F de serrage des électrodes contre les tôles,
- intensité du courant is de soudage,
- temps pendant lequel on fait passer le courant $\Delta t_s$,
- temps pendant lequel on applique la force pour forger $\Delta t_f$,
- état d'usure des électrodes.

Pour chacun de ces paramètres, sauf l'état d'usure des électrodes, on définit des valeurs de consigne qui sont celles qu'on doit réaliser à l'aide de la machine de soudage pilotée par ses automatismes.

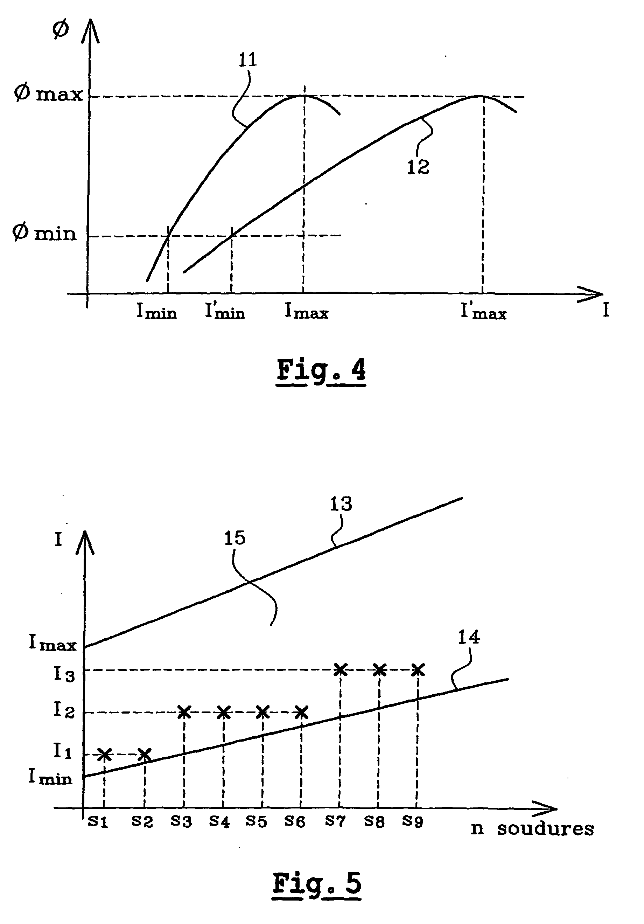

On constate que, à force de serrage F, temps de passage du courant $\Delta t_s$ et temps de forgeage $\Delta t_f$ donnés, la qualité du soudage (mesurée par le diamètre du bouton $\Phi$) varie avec le courant Is (figure 4) en partant d'une valeur minimale $\Phi_{min}$ pour atteindre une valeur maximale $\Phi_{max}$, lorsque le courant Is passe d'une valeur $I_{min}$ à une valeur $I_{max}$, valeur au delà de laquelle on observe un phénomène dit d'expulsion correspondant au fait que la fusion est trop importante, si bien que le métal fondu est expulsé sans que le diamètre du bouton augmente ; en fait, ce dernier diminue, comme l'indique la courbe 11.

Mais, le diamètre du bouton de soudage dépend également de l'usure des électrodes (qui se traduit, entre autres, par une augmentation du diamètre de leurs extrémités). Cette usure a pour effet de déformer la courbe diamètre du bouton = f(intensité) en la déplaçant vers les hautes intensités et en diminuant sa pente, comme cela peut se voir sur la figure 4, dans laquelle la courbe 11 correspond à une électrode neuve et la courbe 12 à une électrode usée. Pour l'électrode usée, le diamètre minimal $\Phi_{min}$ correspond à une intensité $I'_{min} > I_{min}$ et le diamètre maximal $\Phi_{max}$ correspond à une intensité $I'_{max} > I_{max}$; l'écart entre $I_{max}$ et $I'_{max}$ étant sensiblement supérieur à l'écart entre $I'_{min}$ et $I_{min}$.

Pour que le soudage soit satisfaisant, il faut que le diamètre du bouton de soudage soit compris entre $\Phi_{min}$ et $\Phi_{max}$, et que l'intensité soit inférieure à l'intensité pour laquelle le phénomène d'expulsion apparaît. Comme les électrodes s'usent au fur et à mesure qu'on réalise des soudures, pour garantir la qualité des points de soudure successifs, il faut, au moins, faire évoluer la consigne d'intensité au fur et à mesure que le nombre de points de soudure, réalisés avec les mêmes électrodes, augmente.

A la figure 5, on a représenté dans un diagramme « nombre de soudures/intensité », les courbes 13 et 14 représentant respectivement l'évolution de $I_{max}$ et $I_{min}$ en fonction du nombre de soudures (l'échelle de l'axe horizontal correspondant au nombre de soudures est arbitraire et choisi pour que les courbes 13 et 14 soient des droites, ce qui est purement formel).

Les courbes 13 et 14 délimitent un domaine 15 de soudabilité, dans lequel se trouvent les points de fonctionnement correspondant aux soudures successives repérées $s_1$ à $s_9$. Ces points sont disposés « en escalier », ce qui correspond à la façon habituelle de piloter une installation de soudage par points, connue sous le nom de "loi de déphasage". Comme, en réalité, les courbes 13 et 14 n'ont pas une forme connue convenablement, il convient de déterminer au bout de combien de soudures il est nécessaire de modifier la consigne d'intensité et dans quelle mesure. C'est le but de la présente invention, appliquée au soudage par points, que de déterminer de façon automatique quand faire varier la consigne d'intensité, et de combien.

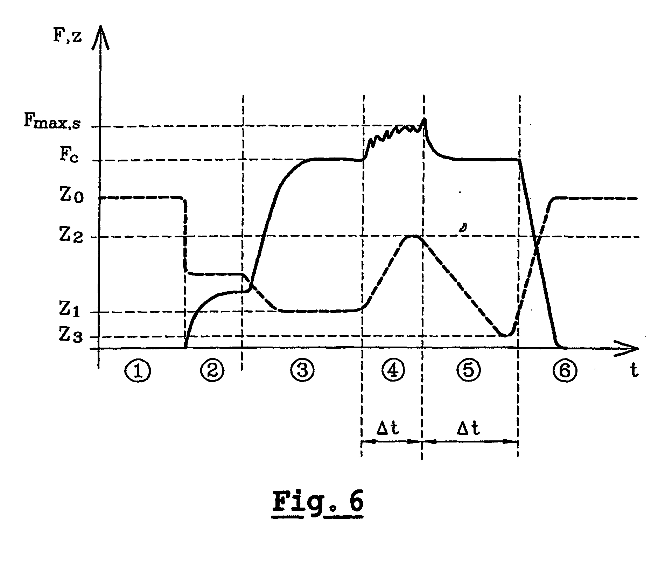

Afin de bien comprendre l'invention, on va maintenant, en regard de la figure 6, décrire plus en détails un cycle élémentaire de réalisation d'un point de soudure.

Sur la figure 6 on a représenté l'évolution dans le temps de deux grandeurs observables qui sont :

- la force F de serrage des électrodes contre l'assemblage à souder,
- l'écartement z des électrodes; cet écartement se mesure par la distance entre deux points de repère arbitraires A et A' définis sur chacune des électrodes (figure 1).

Ces deux grandeurs peuvent être mesurées en temps réel à l'aide de capteurs de force et de déplacement, qui équipent de façon connue la machine de soudage.

Sur la figure 6, on observe 6 phases successives qui sont :

- 1 : avant serrage des électrodes, la force est nulle et l'écartement a une valeur $z_0$ suffisante pour permettre de positionner les tôles à assembler entre les électrodes.
- 2 et 3 : accostage, les électrodes se rapprochent jusqu'à arriver au contact des tôles, la distance z décroît, puis la force augmente pour atteindre la force de consigne Fc et la distance z s'établit à une valeur $z_1$ correspondant au contact des deux tôles l'une sur l'autre,
- 4 : soudage, on fait passer le courant électrique avec une intensité de consigne lc. Pendant cette phase, du fait de la dilatation des tôles résultant du chauffage engendré par le courant électrique, la force F augmente jusqu'à une valeur $F_{max,s}$ , l'écartement z entre les électrodes augmente jusqu'à une valeur $z_2$,
- 5 : forgeage, la force est maintenue mais l'alimentation en courant électrique est coupée, la force se stabilise à la valeur Fc et les électrodes se rapprochent légèrement en formant des indentations dans les zones de contact avec les tôles, la distance z passe par un minimum $z_3$,
- 6 : fin du soudage, on écarte les électrodes pour dégager ou déplacer les tôles.

On voit également sur cette figure que les grandeurs F et z varient avec le temps.

A chaque instant, on peut mesurer F(t) et z(t). Par des mesures électriques connues en elles-mêmes, on peut également mesurer l'intensité instantanée i(t) et la tension instantanée u(t) pendant la phase 4.

Pour piloter le processus de soudage, on fixe les grandeurs de consigne que sont la force Fc et l'intensité lc ainsi que les durées de soudage $\Delta t_s$ et de forgeage $\Delta t_f$. Par un traitement informatique adéquat, que l'homme du métier sait réaliser, des mesures F(t), z(t), i(t) et u(t), on peut déterminer, après la réalisation d'un point de soudure, des grandeurs qui sont observables, au sens qui a été défini précédemment.

Ces grandeurs observables sont par exemple :

- la force maximale de soudage $F_{max,s}$ ,
- la dilatation maximale au cours du soudage $\Delta z_{max,s} = z_2 - z_1$,
- la rétraction maximale au cours du forgeage $\Delta z_{max,f} = z_2 - z_3$,
- l'énergie électrique totale consommée $E_{élec} = \int u(t).i(t).dt$, (l'intégration est faite sur la durée du soudage).

Il est à noter que, dans ce processus, les grandeurs observables qui viennent d'être définies ne sont ni des grandeurs d'entrée, ni des grandeurs de sortie, ni des consignes.

A partir de ces grandeurs observables, et notamment à partir des grandeurs $\Delta z_{max,s}$ , $\Delta z_{max,f}$ et $E_{élec}$ , on peut calculer une valeur prévisionnelle du diamètre $\Phi_p$ du bouton de soudage. Pour calculer $\Phi_p$ on utilise un modèle M ayant pour variables les grandeurs mesurables $\Delta z_{max,s}$ , $\Delta z_{max,f}$ et $E_{élec}$ , et tel que :

$$\Phi_p = M(\Delta z_{max,s}, \Delta z_{max,f}, E_{élec})$$

Dans cet exemple et en reprenant la terminologie définie plus haut, la grandeur $\Phi$ représente le résultat R.

Le modèle M prend en compte les trois grandeurs observables $\Delta z_{max,s}$ , $z_{max,f}$ et $E_{élec}$ , mais il pourrait en prendre d'autres et il pourrait faire intervenir une ou plusieurs valeurs de consigne telles que Ic, Fc, $\Delta t_s$ et $\Delta t_f$ . Il est important, cependant, de noter que le modèle prend en compte au moins deux variables indépendantes dont au moins une grandeur observable, ce qui est nécessaire pour évaluer $\Phi_p$. En effet, la prise en compte d'une seule des ces grandeurs mesurables, éventuellement complétée par la prise en compte d'une ou plusieurs consignes, ou la seule prise en compte des consignes, ne permet pas d'évaluer $\Phi_p$ avec suffisamment de précision.

Comme cela a été indiqué précédemment, le pilotage du processus de soudage par points consiste à déterminer, après chaque réalisation d'une soudure, les consignes à appliquer pour réaliser la soudure suivante de façon satisfaisante. Plus particulièrement, cela consiste à déterminer la consigne d'intensité de courant Ic pour que le diamètre du bouton de soudage soit satisfaisant, c'est-à-dire compris entre les deux valeurs $\Phi_{min}$ et $\Phi_{max}$ définis plus haut, et pour cela que la consigne de courant Ic se situe à l'intérieur du domaine de soudabilité.

Pour cela, pour chaque opération de soudage :

- on enregistre les paramètres observables nécessaires pour déterminer les grandeurs observables utilisées par le modèle M ; dans le cas présent ce sont $\Delta z_{max,s}$ , $\Delta z_{max,f}$ et $E_{élec}$,
- à l'aide du modèle M, on calcule l'estimation du résultat $R_{es}$, égal, dans le cas présent, au diamètre du bouton de soudure : $R_{es} = \Phi_p = M(\Delta z_{max,s}, \Delta z_{max,f}, E_{élec}$ ),
- à l'aide d'une loi de commande L ayant pour variable d'entrée au moins $R_{es}$, on calcule la consigne de courant Ic pour l'opération de soudage suivante : $Ic = L(R_{es})$,
- et on effectue l'opération de soudage suivante en utilisant la nouvelle consigne d'intensité.

Plusieurs lois de commande sont possibles. En particulier, on peut utiliser la loi de commande L définie de la façon suivante:

- on choisit une valeur minimale $\Phi_{min}$ et une valeur maximale $\Phi_{max}$ pour le diamètre du bouton de soudage,
- on choisit un nombre qm,
- on effectue la moyenne glissante $\Phi_{mg}$ de qm dernières prédictions du diamètre $\Phi$ du bouton de soudage,
- si $\Phi_{mg} > \Phi_{max}$ , on diminue la consigne Ic d'intensité de soudage, si $\Phi_{min} \leq \Phi_{mg} \leq \Phi_{max}$ on ne modifie pas la consigne Ic d'intensité de soudage, si $\Phi_{mg} < \Phi_{min}$ on augmente la consigne Ic d'intensité de soudage.

On peut, en outre, fixer une valeur $\Phi_0 < \Phi_{min}$ et, si la dernière prédiction du diamètre du bouton de soudage $\Phi$ est inférieure à $\Phi_0$, on augmente la consigne Ic d'intensité de soudage.

Pour ajuster la consigne d'intensité, on fixe un incrément $\Delta Ic$ d'intensité de soudage, et lorsqu'on diminue ou on augmente la consigne Ic d'intensité de soudage, on soustrait ou on ajoute à Ic l'incrément $\Delta Ic$.

Le modèle M est un modèle statistique construit à partir d'une base d'apprentissage $B_{ap}$ constituée de l'ensemble des consignes, des grandeurs observables ainsi que des mesures du résultat, obtenues pour une série de N points de soudure. Il peut être validé sur une base de test $B_{test}$ constituée de la même façon que la base d'apprentissage, mais avec des exemples différents de ceux qui constituent la base d'apprentissage.

Le modèle M est par exemple un réseau de neurones, mais peut être de tout type de modèle statistique.

On va maintenant décrire de façon générale la construction du modèle et son utilisation, puis on décrira les particularités de l'application au soudage par points.

Comme on l'a indiqué ci-dessus, la base d'apprentissage est constituée d'un ensemble de N observations, repérées par un indice i, choisies de façon à couvrir au mieux le champ des conditions possibles de réalisation du processus à mesurer.

A chaque observation i, on fait correspondre :

- le résultat $R_i$ obtenu (mesuré),
- n variables $x^i_1,.... x^i_n$, correspondant aux valeurs des consignes et des grandeurs observables mesurées et qui constituent le vecteur $\mathbf{x}^i$; on peut noter que ces variables peuvent également correspondre à des grandeurs d'entrée qui, dans le cas du soudage par points peuvent être, par exemple, l'épaisseur et la nature des tôles à souder; cependant, dans le cas présent, on considère que toutes les observations sont faites avec des tôles identiques.

De la même façon, la base de test est composée de N' observations pour chacune desquelles, on fait correspondre les valeurs mesurée de R et des n variables $x_1,...x_n$, qui constituent le vecteur $\mathbf{x}$.

Le modèle M est une fonction de forme adéquate, que l'homme du métier sait choisir en fonction du type de modèle qu'il veut utiliser ; ce peut être un polynôme des n variables $x_1,...x_n$, ou un réseau de neurones comportant au moins un neurone non linéaire et dépendant des mêmes variables. Cette fonction dépend de paramètres $\theta_1,.....\theta_q$, qui constituent un vecteur $\theta$. Elle permet de calculer une estimation du résultat $R_{est} = M(x ; \theta)$ (ou de façon développée:

$R_{est}$ = M(x$_1$,...x$_n$ ; θ$_1$,.....θ$_q$)). Ce modèle peut être ajusté sur la base d'apprentissage en recherchant le vecteur θ$_a$ qui minimise le score S, noté également S(M ; B$_{ap}$) lorsqu'il est calculé pour le modèle M sur la base d'apprentissage B$_{ap}$, égal à la somme, pour tous les points de la base d'apprentissage, des valeurs d'une fonction coût J qui est, par exemple, l'écart quadratique entre l'estimation faite par le modèle et le résultat effectivement mesuré :

$$J(x) = (R_{est} - R)^2 = (M(x ; θ) - R)^2$$

Cette fonction coût J est une fonction de la variable **x** qui dépend du vecteur paramètres θ, si bien qu'on peut l'écrire sous la forme J(x$_1$,...x$_n$ ; θ$_1$,.....θ$_q$).

On a alors :

$$S (M ; B_{ap}) = Σ_{i=1,N} J(x^i) = Σ_{i=1,N} (R_{est,i} - R_i)^2$$

Les vecteurs **x$^1$,.....x$^N$** sont les vecteurs correspondant aux différents points de la base d'apprentissage B$_{ap}$. La recherche du vecteur θ$_a$ peut être faite par toute méthode de minimisation du coût connue de l'homme du métier, telle que, par exemple, l'algorithme de quasi-Newton (décrite par exemple dans W.H. PRESS & al, « *Numerical Recipies in C : The art of Scientific Computing* » second Edition, Cambridge University Press, 1992) ou celui de Levenberg-Marquardt (décrit par exemple dans K. LEVENBERG, *« A Method for the Solution of Certain Non-linear Problems in Least Squares* »*, Quaterly Journal of Applied Mathematics II (2), pp. 164-168, 1944 et dans D.W. MARQUARDT « *An Algorithm for Least-squares Estimation of Non-linear Parameters* », Journal of the Society of Industrial and Applied Mathematics 11 (2), pp 431-441, 1963).

On obtient ainsi un modèle ajusté M$_a$(x ; θ$_a$ ). On peut tester un tel modèle sur la base de test B$_{test}$ en calculant le score S qui est égal à la fonction coût, calculée pour les points de la base de test :

$$S(M_a ; B_{test}) = Σ_{i=1,N'} F(x^i) ; x^1,.....x^{N'} \text{ appartenant à } B_{test}$$

Ce score peut également, et de la même façon, être calculé sur la base d'apprentissage.

Cependant, pour un même type de modèle, on peut envisager des modèles comportant plus ou moins de paramètres. Par exemple, si le modèle est du type polynomial, on peut choisir un polynôme de degré 1 ou de degré supérieur. De même, si le modèle est du type réseau de neurones, on peut choisir un modèle comportant un ou plusieurs neurones. Le score d'un modèle dépend notamment du nombre de paramètres, et en particulier, lorsque ce nombre augmente, le score diminue, ce qui est souhaitable, car un modèle est d'autant meilleur que son score est faible, pour autant qu'il n'y ait pas sur-ajustement. En effet, les résultats de mesure qui constituent les bases d'apprentissage ou de test sont entachés d'erreurs qui introduisent un bruit aléatoire. En augmentant trop le nombre de paramètres, on peut obtenir un modèle dont le score sur la base d'apprentissage est nul, ce qui pourrait paraître idéal, mais qui, en réalité, est un défaut. En effet, un tel modèle prédit parfaitement non pas le phénomène à modéliser, mais ce phénomène auquel se rajoute le bruit qui a affecté la base d'apprentissage. Il en résulte que l'application d'un tel modèle à un point non contenu dans la base d'apprentissage donnera un résultat a priori entaché d'une erreur importante.

Par ailleurs, pour un même type de modèle, c'est-à-dire pour une forme algébrique et un nombre de paramètres donnés, la fonction de coût admet, dans le cas général, plusieurs minima, c'est à dire plusieurs vecteurs paramètres θ$_a$. A chacun de ces vecteurs paramètres correspond un modèle.

Afin de rechercher le meilleur modèle, c'est-à-dire celui qui aura le score le plus faible tout en n'étant pas affecté d'un sur-ajustement, on peut utiliser des méthodes connues en elles mêmes, telles que les méthodes dites de « validation croisée » ou de « régularisation ».

Mais ces méthodes sont à la fois lourdes et pas toujours suffisamment efficaces. Aussi, l'inventeur a imaginé une méthode nouvelle plus performante que les méthodes connues.

Pour mettre en oeuvre cette méthode, on procède de la façon suivante :

- on choisit une structure de modèle dont le nombre de paramètres peut être choisi arbitrairement,
- on détermine comme indiqué ci-dessus un premier modèle ajusté comportant q, paramètres: M$_{a, 1}$(x ; θ$_{a,1}$), dans lequel θ$_{a,1}$ est un vecteur de dimension q$_1$ ,
- on calcule le jacobien Z du modèle M$_{a, 1}$(x ; θ$_{a,1}$). Pour cela, on considère les fonctions M$_{a, 1}$(x$^i$ ; θ) dans lesquelles on considère que le vecteur paramètres θ du modèle est la variable. La matrice Z est alors la matrice ayant q$_1$ lignes et N colonnes dont les terme z$_{i,j}$ sont égaux à :

$$z_{i,j} = \partial\, M_{a,1}(x^i\,;\,\theta)/\partial\,\theta_j \text{ au point } \theta = \theta_{a,1}$$

- on calcule ensuite, pour chaque observation **i** de $B_{ap}$ le scalaire suivant, noté $h_{ii}$:

$$h_{ii} = (z_{i,1},\dots z_{i,q1})\,(^t Z\, Z)^{-1t}(Z_{i,1},\dots Z_{i,q1})$$

- on calcule alors, sur la base d'apprentissage, un score généralisé du modèle ayant pour vecteur paramètres $\theta_{a,1}$ :

$$E\,(\theta_{a,1}) = \Sigma_{i=1,N}[(M_{a,1}(x^i\,;\,\theta_{a,1}) - R_i)/(1 - h_{ii})]^2$$

et on calcule une grandeur $\mu\,(\theta_{a,1}) = (N.q_1)^{-1/2}\,\Sigma_{i=1\,\text{à N}}\,h_{ii}^{1/2}$

- puis on détermine de la même façon des modèles ayant, au choix, des structures ou des nombres de paramètres différents, ou correspondant à différents minima d'une même fonction de coût. On obtient alors une série de modèles $M_{a,k}$ auxquels sont associés les grandeurs $E\,(\theta_{a,k})$ et $\mu\,(\theta_{a,k})$.
- en comparant les valeurs de $E\,(\theta_{a,k})$ et $\mu\,(\theta_{a,k})$, on détermine alors le modèle $M_{a,k}$ pour lequel $E\,(\theta_{a,k})$ est parmi les plus petites valeurs obtenues et $\mu\,(\theta_{a,k})$ est maximal. Ce modèle correspond au modèle optimal qu'on note $M_{a,\,opt}$. C'est ce modèle qui est alors utilisé pour effectuer la régulation du processus.

Pour déterminer le modèle optimal, on peut, par exemple, procéder de la façon suivante :

- on considère une pluralité de modèles $M_{a,k}$ pour lesquels on calcule les valeurs correspondantes de $E\,(\theta_{a,k})$ et $\mu\,(\theta_{a,k})$,
- on considère l'ensemble constitué par les valeurs des $E\,(\theta_{a,k})$, cet ensemble comporte une plus petite valeur min $[E\,(\theta_{a,k})]$, et on retient au moins deux modèles dont les valeurs des $E\,(\theta_{a,k})$ sont les plus proches de min$[E\,(\theta_{a,k})]$, pour cela on peut utiliser tout critère que l'homme du métier sait déterminer,
- on considère les modèles qui ont été sélectionnés comme indiqué, et parmi ces modèles, on retient celui pour lequel la valeur de $\mu\,(\theta_{a,k})$ est la plus grande ; ce modèle est le modèle considéré comme optimal.

Ainsi, on choisit le modèle ayant le plus grand $\mu\,(\theta_{a,k})$ parmi les modèles ayant les plus petits $E\,(\theta_{a,k})$.

On peut aussi, selon une méthode connue en elle-même, choisir un « comité de modèles » constitué d'une pluralité de modèles a priori acceptables, et, chaque fois que l'on veut faire une prévision, on utilise le comité de modèles pour déterminer la prévision la plus pertinente (voir par exemple CLEMEN, R.T. *« Combining forecasts: A review and annotated bibliography »*, International Journal of Forecasting, Vol 5, pp 559-584, 1989).

Par la suite, on ne parlera que de « modèle », mais ce qui va être exposé pourra être transposé mutatis mutandis, par l'homme du métier, à un « comité de modèles ».

Le modèle ainsi obtenu n'est pas nécessairement satisfaisant, c'est en particulier le cas lorsque la base d'apprentissage ne contient pas assez de points ou lorsque ces points ne sont pas répartis de façon satisfaisante dans l'espace des entrées. Afin d'évaluer la qualité du modèle et éventuellement de l'améliorer, on peut utiliser la base de test. Pour cela, on procède de la façon suivante :

- on détermine a priori, par des essais préliminaires, un intervalle d'estimation de l'écart type du bruit de mesure $[\sigma_{min}, \sigma_{max}]$, pour la mesure du résultat R,
- on calcule alors le score du modèle $M_{a,\,opt}$ sur la base test : $S(M_{a,\,opt}; B_{test})$ et on compare ce score à l'intervalle $[\sigma_{min}, \sigma_{max}]$ ; si $\sigma_{min} < S(M_{a,\,opt}; B_{test}) < \sigma_{max}$, on considère que le modèle est satisfaisant ; dans le cas contraire, on enrichit la base d'apprentissage avec un ou plusieurs points pris dans la base de test et on recommence le calcul d'un modèle optimal.

Les exemples issus de la base test et introduits dans la base d'apprentissage peuvent être choisis de diverses façons. Mais il est préférable de choisir les points pour lesquels l'intervalle de confiance de l'estimation du résultat R faite par le modèle est le plus grand, c'est-à-dire pour lesquels cette estimation est la plus incertaine. Cet intervalle de confiance du point i, qu'il appartienne à la base d'apprentissage ou à la base de test, est déterminé par le coefficient $h_{ii}$ défini précédemment. Plus précisément, il est proportionnel à $h_{ii}^{1/2}$. Cet ajustement, ou recalage du modèle, peut être fait en cours d'exécution du processus, en faisant de temps en temps des mesures du résultat de façon à constituer une base de test à l'aide de laquelle on évalue les performances du modèle et, si nécessaire, on enrichit la base d'apprentissage afin de recalculer un modèle plus performant.

Dans le cas particulier du soudage par points, selon l'invention :

- par des essais préliminaires on construit une première base d'apprentissage et on évalue, par des essais de reproductibilité de la mesure, l'intervalle de dispersion de l'écart type du bruit de mesure $[\sigma_{min}, \sigma_{max}]$, pour la mesure du diamètre du bouton de soudage (le résultat R). Cette base d'apprentissage est construite en réalisant des séries de points de soudure avec des intensités de soudage variant de façon alternative entre la limite inférieure de soudabilité et la limite supérieure de soudabilité, sans faire varier les autres, consignes que sont le temps de soudage, le temps de forgeage et la force de soudage. Ceci permet de construire un modèle qui servira à piloter le soudage sans faire varier la durée d'un cycle, c'est-à-dire en conservant une productivité constante.
- on considère un modèle statistique, et, de préférence, un modèle neuronal, ayant pour variable d'entrée les grandeurs observables définies plus haut, et pour sortie, l'estimation du diamètre du bouton de soudage. A l'aide de la base d'apprentissage, et en appliquant par exemple la méthode qui vient d'être définie, on optimise le modèle. Les inventeurs ont constaté qu'un bon modèle est notamment un modèle dont les variables d'entrée sont $\Delta z_{max,s}$, $\Delta z_{max,f}$ et $E_{élec}$, comme indiqué ci-dessus,
- pour réguler le processus, on utilise le modèle comme cela est indiqué plus haut, afin de réactualiser, si nécessaire, la consigne de soudage Ic après chaque réalisation d'un point de soudure,

En outre, et afin d'améliorer le modèle, on peut, tout au long de l'exploitation du processus, prélever des échantillons de tôles soudées et mesurer le diamètre du bouton de soudure de façon à constituer une base de test. A l'aide de cette base de test, on calcule le score du modèle ; si ce score est satisfaisant, on ne modifie pas le modèle ; si ce score n'est pas satisfaisant, on extrait de la base de test les points pour lesquels la prédiction est la plus incertaine, c'est-à-dire dont l'intervalle de confiance est supérieur à une valeur Sk fixée à l'avance, et on introduit ces points dans la base d'apprentissage pour l'enrichir. Avec cette base d'apprentissage enrichie, on recalcule un modèle optimisé et on poursuit la régulation du processus avec ce nouveau modèle. Comme on le comprendra aisément, l'application du procédé qui vient d'être décrit ne se limite pas au cas du soudage par points, mais il s'applique à tout processus qui peut faire l'objet d'une modélisation.

Que ce soit dans le cas général ou dans celui du soudage par points, le procédé est mis en oeuvre par un ordinateur relié à des capteurs et à un module de commande du processus. Cet ordinateur comporte des programmes destinés à calculer le modèle optimal à partir de fichiers dans lesquels sont enregistrés les données relatives aux bases d'apprentissage et de test, des programmes destinés à utiliser le modèle optimal à partir de données mesurées sur le processus, à calculer les consignes à partir de la loi de commande, et à envoyer ces consignes à l'équipement destiné à réaliser le processus. L'homme du métier sait réaliser un tel automatisme.

Dans le cas particulier du soudage par points, l'équipement destiné à réaliser le processus est une machine de soudage par points connue en elle-même et comportant, également de façon connue, des moyens de mesure de la position des électrodes, de la force, de l'intensité et de la tension instantanées, ainsi que des moyens de commande. Ces moyens sont reliés de façon connue à l'ordinateur, soit directement soit par l'intermédiaire d'automates particuliers connus en eux-mêmes.

**Revendications**

**1.** Procédé de contrôle et de commande d'un processus technique s'exécutant dans le temps, soit de façon continue soit de façon discontinue, en appliquant à chaque instant t des consignes $\{C_1(t),...C_n(t)\}$, conduisant à un résultat R(t) mesurable mais non observable et engendrant une pluralité de grandeurs observables distinctes du résultat R(t) dont au moins deux sont indépendantes $\{G_1(t),....G_m(t)\}$, **caractérisé en ce que** :

- on mesure au moins deux grandeurs observables indépendantes $G_1(t),....G_p(t)$,
- à l'aide d'un modèle prédictif M, ou d'un comité de modèles, dont les variables comportent les au moins deux grandeurs observables indépendantes, on calcule une estimation $R_{es}(t)=M(G_1(t),....G_p(t))$ du résultat R(t),
- à l'aide d'une loi de commande L, dont la variable d'entrée est le résultat estimé $R_{es}(t)$, on calcule de nouvelles consignes $\{C_1(t+1),...C_n(t+1)\} = L(R_{es}(t))$ applicables pour l'instant t+1,
- et on remplace les consignes $\{C_1(t),...C_n(t)\}$ par les consignes$\{C_1(t+1),...C_n(t+1)\}$,

**2.** Procédé selon la revendication 1 **caractérisé en ce que** le modèle prédictif M est un modèle d'ajustement statistique dépendant de paramètres $\{\theta_1,...\theta_p\}$ constituant un vecteur paramètres $\theta$ ajustés sur une base d'apprentissage $B_{ap}$ constituée de l'ensemble des consignes, des mesures des grandeurs observables et de la mesure du résultat pour une pluralité d'exécutions successives du processus technique.

**3.** Procédé selon la revendication 2 **caractérisé en ce que** pour déterminer le modèle M :

- on choisit une structure de modèle dépendant d'un vecteur paramètre θ,
- on choisit une fonction de coût J ayant par exemple une forme quadratique,
- avec la base d'apprentissage, on calcule une succession de modèles ajustés $M_{a, k}$ correspondant à différents vecteurs paramètre $\theta_k$ de dimension $q_k$ qui minimisent, globalement ou localement, la fonction coût sur la base d'apprentissage,
- pour chaque modèle $M_{a, k}$, on calcule les coefficients $h_{ii}$ de chacun des exemples de la base d'apprentissage, et on calcule le score généralisé du modèle $M_{a, k}$ :

$$E(\theta_{a,k}) = \Sigma_{i=1,N} \left[ (M_{a, k}(x^i ; \theta_{a, k}) - R_i)/(1 - h_{ii}) \right]^2$$

- et on calcule une grandeur $\mu(\theta_{a,k}) = (N.q_k)^{-1/2} \Sigma_{i=1 \text{ à } N} h_{ii}^{1/2}$ et on choisit le modèle $M_{a,k}$ ayant le plus grand $\mu(\theta_{a,k})$ parmi les modèles ayant les plus petits $E(\theta_{a,k})$, ce modèle est le modèle optimal $M_{a,opt}$.

**4.** Procédé selon la revendication 2 ou 3 **caractérisé en ce que** :

- on détermine pour la mesure du résultat R un intervalle de dispersion de l'écart type du bruit de mesure [$\sigma_{min}$, $\sigma_{max}$],
- et on ajuste les paramètres {$\theta_1,...\theta_p$} du modèle prédictif M de telle sorte que, sur une base de test $B_{test}$, il ait un score $S = S(M ; B_{test})$ tel que $\sigma_{min} < S < \sigma_{max}$, la base de test étant constituée de l'ensemble des consignes, des mesures des grandeurs observables et de la mesure du résultat pour une pluralité d'exécutions successives du processus technique.

**5.** Procédé selon la revendication 3 **caractérisé en ce que** pour ajuster les paramètres {$\theta_1,...\theta_p$} du modèle prédictif M, on choisit une première base d'apprentissage $B_{ap}$ et une première base de test $B_{test}$, à l'aide de ladite première base d'apprentissage on détermine une première estimation des paramètres {$\theta_1,...\theta_p$}, de telle sorte que le score du modèle M pour la base d'apprentissage soit compris dans l'intervalle [$\sigma_{min}$, $\sigma_{max}$], puis, en utilisant dans le modèle M cette première estimation des paramètres, à l'aide de la première base de test $B_{test}$, on évalue le score $S = S(M ; B_{test})$ qu'on compare à l'intervalle de dispersion [$\sigma_{min}$, $\sigma_{max}$], si S est à l'intérieur dudit intervalle, on considère que l'estimation des paramètres est satisfaisante, dans le cas contraire, on complète la base d'apprentissage $B_{ap}$ avec des exemples issus de la première base de test pour constituer une nouvelle base d'apprentissage, éventuellement on complète la base de test et on détermine à nouveau les paramètres {$\theta_1,...\theta_p$} à l'aide de la nouvelle base d'apprentissage et le score S sur la nouvelle base de test et on poursuit les itérations jusqu'à ce que le score S soit compris dans l'intervalle de dispersion [$\sigma_{min}$, $\sigma_{max}$].

**6.** Procédé selon la revendication 5 **caractérisé en ce que**, pour compléter la base d'apprentissage avec des exemples issus de la base de test :

- on fixe un seuil d'intervalle de confiance Sk, pour les prédictions du modèle
- on calcule l'intervalle de confiance Ik de la prédiction du modèle M pour chacun des exemples de la base de test,
- et on introduit dans la base d'apprentissage au moins un des exemples de la base de test dont l'intervalle de confiance Ik est supérieur à Sk, c'est-à-dire dont l'estimation du résultat est la plus incertaine.

**7.** Procédé selon la revendication 5 **caractérisé en ce que**, l'intervalle de confiance Ik de la prédiction du modèle M pour chaque exemple de la base de test est proportionnel à la racine carrée du coefficient $h_{ii}$ de cet exemple.

**8.** Procédé selon l'une quelconque des revendications 4 à 7 **caractérisé en ce que**, au cours de l'exploitation du processus technique, on mesure au moins un résultat et les grandeurs observables correspondantes, de façon à déterminer au moins un exemple supplémentaire qu'on ajoute à la base d'apprentissage et avec la nouvelle base d'apprentissage ainsi obtenue, on ajuste les paramètres du modèle et on évalue la performance du modèle.

**9.** Procédé selon l'une quelconque des revendications 1 à 8 **caractérisé en ce que** le modèle M est un réseau de neurones.

**10.** Procédé selon l'une quelconque des revendications 1 à 9 **caractérisé en ce que** le processus technique est le soudage par points de tôles.

**11.** Procédé selon la revendication 10 **caractérisé en ce que** le résultat R est le diamètre $\Phi$ du bouton de soudage, ou toute autre grandeur comparable, telle que, par exemple, la force d'arrachement du bouton de soudage, et les consignes $C_1,...C_n$ sont la force de soudage $F_s$, l'intensité de soudage $I_s$, le temps de soudage $\Delta t_s$ et le temps de forgeage $\Delta t_f$.

**12.** Procédé selon la revendication 11 **caractérisé en ce que** les grandeurs observables sont l'énergie électrique totale $E_{élec}$, la dilatation maximale en cours de soudage $\Delta z_{max,s}$ et la contraction maximale pendant la phase de forgeage $\Delta z_{max,f}$.

**13.** Procédé selon la revendication 11 ou la revendication 12 **caractérisé en ce que** la loi L est définie de la façon suivante:

- on choisit une valeur minimale $\Phi_{min}$ et une valeur maximale $\Phi_{max}$ pour le diamètre du bouton de soudage,
- on choisit un nombre qm,
- on effectue la moyenne glissante $\Phi_{mg}$ de qm dernières prédictions du diamètre du bouton de soudage $\Phi$,
- si $\Phi_{mg} > \Phi_{max}$ , on diminue la consigne lc d'intensité de soudage, si $\Phi_{min} \leq \Phi_{mg} \leq \Phi_{max}$ on ne modifie pas la consigne lc d'intensité de soudage, si $\Phi_{mg} < \Phi_{min}$ on augmente la consigne lc d'intensité de soudage.

**14.** Procédé selon la revendication 13 **caractérisé en ce que** l'on fixe en outre une valeur $\Phi_0 < \Phi_{min}$ et, si la dernière prédiction du diamètre du bouton de soudage $\Phi$ est inférieure à $\Phi_0$, on augmente la consigne lc d'intensité de soudage.

**15.** Procédé selon la revendication 13 ou la revendication 14 **caractérisé en ce que** on fixe un incrément $\Delta lc$ d'intensité de soudage, et, lorsqu'on diminue ou on augmente la consigne lc d'intensité de soudage, on soustrait ou on ajoute à lc l'incrément $\Delta lc$.

**16.** Procédé selon l'une quelconque des revendications 10 à 15 **caractérisé en ce que** pour construire la base d'apprentissage, on réalise une succession de points de soudure en faisant varier alternativement la consigne d'intensité de soudage lc entre la borne inférieure et la borne supérieure de l'intervalle de soudabilité et usant ainsi les électrodes de soudage, les autres consignes étant maintenues constantes.

**17.** Procédé selon l'une quelconque des revendications 1 à 16 **caractérisé en ce qu'**il est mis en oeuvre par un ordinateur.

**Patentansprüche**

**1.** Verfahren zur Regelung und Steuerung eines entweder kontinuierlich oder diskontinuierlich in der Zeit ablaufenden, technischen Prozesses, indem zu jedem Zeitpunkt t Einstellwerte $\{C_1(t),...C_n(t)\}$ eingesetzt werden, die zu einem messbaren, aber nicht wahrnehmbaren Ergebnis R(t) führen, und die eine Vielzahl von wahrnehmbaren Größen erzeugen, die sich von dem Ergebnis R(t) unterscheiden, und von denen zumindest zwei unabhängig $\{G_1(t),...G_m(t)\}$ sind, **dadurch gekennzeichnet, dass**:

- zumindest zwei wahrnehmbare, unabhängige Größen $G_1(t),...G_p(t)$ gemessen werden,
- mit Hilfe eines Vorhersagemodells M oder eines Ausschusses von Modellen, dessen Variablen die zumindest zwei unabhängigen, wahrnehmbaren Größen aufweisen, eine Schätzung $R_{es}(t)=M(G_1(t),...G_p(t))$ des Ergebnisses R(t) berechnet wird,
- mit Hilfe eines Steuergesetztes L, dessen Eingangsvariable das abgeschätzte Ergebnis $R_{es}(t)$ ist, neue Einstellwerte $\{C_1(t+1),...C_n(t+1)\} = L(R_{es}(t))$ berechnet werden, die für den Zeitpunkt t+1 einsetzbar sind,
- die Einstellwerte $\{C_1(t),...C_n(t)\}$ durch die Einstellwerte $\{C_1(t+1),...C_n(t+1)\}$ ersetzt werden.

**2.** Verfahren gemäß Anspruch 1, **dadurch gekennzeichnet, dass** das Vorhersagemodell M ein statistisches Einstellmodell ist, das von Parametern $\{\theta_1,... \theta_p\}$ abhängt, welche einen Parametervektor $\theta$ bilden, der anhand einer Lehrbasis $B_{ap}$ eingestellt ist, welche aus der Gesamtheit der Einstellwerte, der Messungen der wahrnehmbaren Größen und der Messung des Ergebnisses für eine Vielzahl aufeinander folgender Ausführungen des technischen Prozesses besteht.

3. Verfahren gemäß Anspruch 2, **dadurch gekennzeichnet, dass** zur Bestimmung des Modells M:

   - eine Modellstruktur gewählt wird, die von einem Parametervektor $\theta$ abhängt,
   - eine Kostenfunktion J gewählt wird, die beispielsweise eine quadratische Form aufweist,
   - mit der Lehrbasis eine Abfolge von eingestellten Modellen $M_{a,k}$ entsprechend verschiedenen Parametervektoren $\theta_k$ mit der Abmessung $q_k$ berechnet wird, welche global oder örtlich die Kostenfunktion auf der Lehrbasis minimieren,
   - für jedes Modell $M_{a,k}$ die Koeffizienten $h_{ii}$ für jedes der Beispiele der Lehrbasis berechnet werden und der verallgemeinerte Zähler des Modells $M_{a,k}$ berechnet wird:

$$E(\theta_{a,k}) = \Sigma_{i=1,N} \left[ (M_{a,k}(x^i ; \theta_{a,k}) - R_i)/(1 - h_{ii}) \right]^2$$

   - und eine Größe $\mu(\theta_{a,k}) = (N.q_k)^{-1/2} \Sigma_{i=1 \text{ bis } N} h_{ii}^{1/2}$ berechnet wird und das Modell $M_{a,k}$ mit dem größten $\mu(\theta_{a,k})$ aus den Modellen mit den kleinsten $E(\theta_{a,k})$ ausgewählt wird, wobei dieses Modell das optimale Modell $M_{a,opt}$ ist.

4. Verfahren gemäß Anspruch 2 oder 3, **dadurch gekennzeichnet, dass**:

   - für die Messung des Ergebnisses R ein Streuungsintervall der Abweichung der Art Messrauschen $[\sigma_{min}, \sigma_{max}]$ bestimmt wird,
   - und die Parameter $\{\theta_1,... \theta_p\}$ des Vorhersagemodells M derart eingestellt werden, dass es auf einer Testbasis $B_{test}$ einen Zähler $S = S(M; B_{test})$ gibt, wie $\sigma_{min} < S < \sigma_{max}$, wobei die Testbasis aus der Gesamtheit der Einstellwerte, der Messungen der wahrnehmbaren Größen und der Messung des Ergebnisses für eine Vielzahl aufeinander folgender Ausführungen des technischen Prozesses besteht.

5. Verfahren gemäß Anspruch 3, **dadurch gekennzeichnet, dass** zur Einstellung der Parameter $\{\theta_1,... \theta_p\}$ des Vorhersagemodells M eine erste Lehrbasis $B_{ap}$ und eine erste Testbasis $B_{test}$ gewählt werden, mit Hilfe der ersten Lehrbasis eine erste Schätzung der Parameter $\{\theta_1,... \theta_p\}$ derart bestimmt wird, dass der Zähler des Modells M für die Lehrbasis innerhalb des Intervalls $[\sigma_{min}, \sigma_{max}]$ liegt, dann, indem in dem Modell M diese erste Schätzung der Parameter verwendet wird, mit Hilfe der ersten Testbasis $B_{test}$ der Zähler $S = S(M; B_{test})$ bestimmt wird, der mit dem Streuungsintervall $[\sigma_{min}, \sigma_{max}]$ verglichen wird, und wenn S innerhalb des Intervalls liegt, davon ausgegangen wird, dass die Schätzung der Parameter ausreichend ist, im gegenteiligen Fall die Lehrbasis $B_{ap}$ mit den aus der ersten Testbasis hervorgegangenen Beispielen ergänzt wird, um eine neue Lehrbasis zu bilden, eventuell die Testbasis vervollständigt wird und die Parameter $\{\theta_1,... \theta_p\}$ erneut mit Hilfe der neuen Lehrbasis und dem Zähler S auf der neuen Testbasis bestimmt werden und die Iterationen weiter verfolgt werden, bis dass der Zähler S innerhalb des Streuungsintervalls $[\sigma_{min}, \sigma_{max}]$ liegt.

6. Verfahren gemäß Anspruch 5, **dadurch gekennzeichnet, dass** zur Vervollständigung der Lehrbasis mit den aus der Testbasis hervorgegangenen Beispielen:

   - eine Vertrauensbereichsschwelle Sk für die Vorhersagen des Modells fixiert wird,
   - der Vertrauensbereich Ik der Vorhersage des Modells M für jedes der Beispiele der Testbasis berechnet wird,
   - und zumindest eines der Beispiele der Testbasis, dessen Vertrauensbereich Ik größer als Sk ist, d.h. dessen Schätzung des Ergebnisses am ungenauesten ist, in die Lehrbasis eingefügt wird.

7. Verfahren gemäß Anspruch 5, **dadurch gekennzeichnet, dass** der Vertrauensbereich Ik der Vorhersage des Modells M für jedes Beispiel der Testbasis proportional zu der Quadratwurzel des Koeffizienten $h_{ii}$ dieses Beispiels ist.

8. Verfahren gemäß irgendeinem der Ansprüche 4 bis 7, **dadurch gekennzeichnet, dass** im Verlauf der Verwertung des technischen Prozesses zumindest ein Ergebnis und die entsprechenden wahrnehmbaren Größen gemessen werden, so dass zumindest ein zusätzliches Beispiel bestimmt wird, das der Lehrbasis hinzugefügt wird, und mit der so erhaltenen neuen Lehrbasis die Parameter des Modells eingestellt werden und die Leistung des Modells bewertet wird.

9. Verfahren gemäß irgendeinem der Ansprüche 1 bis 8, **dadurch gekennzeichnet, dass** das Modell M ein Neuronennetz ist.

**10.** Verfahren gemäß irgendeinem der Ansprüche 1 bis 9, **dadurch gekennzeichnet**, der technische Prozess aus dem Punktschweißen von Blechen besteht.

**11.** Verfahren gemäß Anspruch 10, **dadurch gekennzeichnet, dass** das Ergebnis R der Durchmesser $\Phi$ des Schweißknopfes oder irgendeine andere vergleichbare Größe ist, wie beispielsweise die Herausziehkraft des Schweißknopfes, und die Einstellwerte $C_1,...C_n$ die Schweißkraft $F_s$, die Schweißstärke $I_s$, die Schweißzeit $\Delta t_s$ und die Warmmassivumformungszeit $\Delta t_f$ sind.

**12.** Verfahren gemäß Anspruch 11, **dadurch gekennzeichnet, dass** die wahrnehmbaren Größen die gesamte elektrische Energie $E_{élec}$, die maximale Wärmedehnung im Verlauf des Schweißens $\Delta z_{max,s}$ und die maximale Kontraktion während der Warmmassivumformungsphase $\Delta z_{max,f}$ sind.

**13.** Verfahren gemäß Anspruch 11 oder Anspruch 12, **dadurch gekennzeichnet, dass** das Gesetz L in folgender Weise definiert ist:

- man wählt einen minimalen Wert $\Phi_{min}$ und einen maximalen Wert $\Phi_{max}$ für den Durchmesser des Schweißknopfes,
- man wählt eine Zahl qm,
- man nimmt den gleitenden Mittelwert $\Phi_{mg}$ der qm letzten Vorhersagen des Durchmessers des Schweißknopfes $\Phi$,
- wenn $\Phi_{mg} > \Phi_{max}$, verringert man den Einstellwert Ic der Schweißstärke, wenn $\Phi_{min} \leq \Phi_{mg} \leq \Phi_{max}$, verändert man den Einstellwert Ic der Schweißstärke nicht, und wenn $\Phi_{mg} < \Phi_{min}$, erhöht man den Einstellwert Ic der Schweißstärke.

**14.** Verfahren gemäß Anspruch 13, **dadurch gekennzeichnet, dass** außerdem ein Wert $\Phi_0 < \Phi_{min}$ fixiert wird, und wenn die letzte Vorhersage des Durchmessers des Schweißknopfes $\Phi$ kleiner als $\Phi_0$ ist, wird der Einstellwert Ic der Schweißstärke erhöht.

**15.** Verfahren gemäß Anspruch 13 oder Anspruch 14, **dadurch gekennzeichnet, dass** ein Inkrement $\Delta Ic$ der Schweißstärke fixiert wird, und wenn der Einstellwert Ic der Schweißstärke verringert oder erhöht wird, wird von Ic das Inkrement $\Delta Ic$ abgezogen oder ihm hinzugefügt.

**16.** Verfahren gemäß irgendeinem der Ansprüche 10 bis 15, **dadurch gekennzeichnet, dass** zur Bildung der Lehrbasis eine Abfolge von Schweißpunkten hergestellt wird, wobei man den Einstellwert der Schweißstärke Ic abwechselnd zwischen der unteren Grenze und der oberen Grenze des Intervalls der Schweißbarkeit schwanken lässt und so die Schweißelektroden abnutzt, wobei die anderen Einstellwerte konstant gehalten werden.

**17.** Verfahren gemäß irgendeinem der Ansprüche 1 bis 16, **dadurch gekennzeichnet, dass** es von einem Computer umgesetzt wird.

**Claims**

**1.** Method for controlling and operating a technical process which is carried out over time, either in a continuous or in a discontinuous manner, by applying, at each time t, instructions $\{C_1(t),...C_n(t)\}$, which lead to a result R(t) which can be measured but which cannot be observed and which produce a plurality of observable quantities separate from the result R(t), at least two of which $\{G_1(t),...Gm(t)\}$ are independent, **characterised in that**:

- at least two independent observable quantities $G_1(t),...G_p(t)$ are measured,
- using a predictive model M, or an assembly of models, the variables of which comprise the at least two independent observable quantities, an estimate $R_{es}(t)=M(G_1(t),...G_p(t))$ of the result R(t) is calculated,
- using a command law L, the input variable of which is the estimated result $R_{es}(t)$, new instructions $\{C_1(t+1),...C_n(t+1)\} = L(R_{es}(t))$ are calculated which can be applied for the time t+1,
- and the instructions $\{C_1(t),...C_n(t)\}$ are replaced by the instructions $\{C_1(t+1),...C_n(t+1)\}$.

**2.** Method according to claim 1, **characterised in that** the predictive model M is a statistical adjustment model which is dependent on parameters $\{\theta_1... \theta_p\}$ which constitute a vector parameter $\theta$ and which are adjusted based on a set of learning data $B_{ap}$ constituted by all the instructions, measurements of the observable quantities and the measurement of the result for a plurality of consecutive implementations of the technical process.

3. Method according to claim 2, **characterised in that**, in order to determine the model M:

- a model structure is selected which is dependent on a vector parameter $\theta$,
- a cost function J is selected which has, for example, a quadratic form,
- using the set of learning data, a succession of adjusted models $M_{a,k}$ is calculated which corresponds to various vector parameters $\theta_k$ having a dimension $q_k$ which minimise, globally or locally, the cost function based on the set of learning data,
- for each model $M_{a,k}$, the coefficients $h_{ii}$ of each of the examples of the set of learning data are calculated and the generalised score of the model $M_{a,k}$ is calculated:

$$E\,(\theta_{a,k}) = \Sigma_{i=1,N}\,[M_{a,k}\,(X^i;\theta_{a,k})\,-R_i)\,/\,(1-h_{ii})]^2$$

- and a quantity $\mu\,(\theta_{a,k}) = (N.q_k)^{-1/2}\,\Sigma_{i=1\,to\,N}\,h_{ii}^{1/2}$ is calculated, and the model $M_{a,k}$ having the largest $\mu\,(\theta_{a,k})$ is selected from the models having the smallest $E\,(\theta_{a,k})$, this model being the optimum model $M_{a.opt}$.

4. Method according to claim 2 or 3, **characterised in that**:

- a dispersion range $[\sigma_{min}, \sigma_{max}]$ of the standard deviation of the measurement noise is determined for the measurement of the result R,
- and the parameters $\{\theta_1,... \theta_p\}$ of the predictive model M are adjusted in such a manner that, based on a set of test data $B_{test}$, the model has a score $S = S(M;B_{test})$ such that $\sigma_{min} < S < \sigma_{max}$, the set of test data being constituted by all the instructions, the measurements of the observable quantities and the measurement of the result for a plurality of consecutive implementations of the technical process.

5. Method according to claim 3, **characterised in that**, in order to adjust the parameters $\{\theta_1,... \theta_p\}$ of the predictive model M, a first set of learning data $B_{ap}$ and a first set of test data $B_{test}$ are selected, using the first set of learning data, a first estimate of the parameters $\{\theta_1,... \theta_p\}$ is determined in such a manner that the score of the model M for the set of learning data is included in the range $[\sigma_{min}, \sigma_{max}]$, then using this first estimate of the parameters in the model M, using the first set of test data $B_{test}$, the score $S = S(M;B_{test})$ is evaluated and is compared with the dispersion range $[\sigma_{min}, \sigma_{max}]$, if S falls within this range the estimate of the parameters is considered to be satisfactory, otherwise the set of learning data $B_{ap}$ is complemented with examples originating from the first set of test data in order to constitute a new set of learning data, if required the set of test data is complemented and the parameters $\{\theta_1,... \theta_p\}$ are determined again using the new set of learning data and the score S is determined based on the new set of test data, and the iterations are continued until the score S is included in the dispersion range $[\sigma_{min}, \sigma_{max}]$.

6. Method according to claim 5, **characterised in that**, in order to complement the set of learning data with examples originating from the set of test data:

- a confidence interval threshold Sk is fixed for the predictions of the model,
- the confidence interval Ik of the prediction of the model M is calculated for each of the examples of the set of test data,
- and at least one of the examples of the set of test data is introduced into the set of learning data, the confidence interval Ik of which example is greater than Sk, that is to say, the result estimate of which is the most uncertain.

7. Method according to claim 5, **characterised in that** the confidence interval Ik of the prediction of the model M for each example of the set of test data is proportional to the square root of the coefficient $h_{ii}$ of this example.

8. Method according to any one of claims 4 to 7, **characterised in that**, during the implementation of the technical process, at least one result and the corresponding observable quantities are measured in order to determine at least one additional example which is added to the set of learning data and, using the new set of learning data obtained in this manner, the parameters of the model are adjusted and the efficiency of the model is evaluated.

9. Method according to any one of claims 1 to 8, **characterised in that** the model M is a neural network.

**10.** Method according to any one of claims 1 to 9, **characterised in that** the technical process is spot welding of sheet metal.

**11.** Method according to claim 10, **characterised in that** the result R is the diameter $\Phi$ of the weld button, or any other comparable quantity, such as, for example, the pull-out force of the weld button, and the instructions $C_1,...C_n$ are the welding force $F_s$, the welding intensity $I_s$, the welding time $\Delta t_s$ and the forging time $\Delta t_f$.

**12.** Method according to claim 11, **characterised in that** the observable quantities are the total electrical energy $E_{\text{élec}}$, the maximum expansion $\Delta z_{max,s}$ during welding and the maximum contraction $\Delta z_{max,f}$ during the forging phase.

**13.** Method according to claim 11 or claim 12, **characterised in that** the law L is defined in the following manner:

- a minimum value $\Phi_{min}$ and a maximum value $\Phi_{max}$ are selected for the diameter of the weld button,
- a number qm is selected,
- the running mean $\Phi_{mg}$ is carried out for the last qm predictions of the diameter of the weld button $\Phi$,
- if $\Phi_{mg} > \Phi_{max}$, the instruction Ic for the welding intensity is decreased, if $\Phi_{min} \leq \Phi_{mg} \leq \Phi_{max}$, the instruction Ic for the welding intensity is not modified, if $\Phi_{mg} < \Phi_{min}$, the instruction Ic for the welding intensity is increased.

**14.** Method according to claim 13, **characterised in that** a value $\Phi_o < \Phi_{min}$ is further fixed and, if the last prediction of the diameter $\Phi$ of the weld button is less than $\Phi_o$, the instruction Ic for the welding intensity is increased.

**15.** Method according to claim 13 or claim 14, **characterised in that** an increment $\Delta Ic$ of welding intensity is fixed and, when the instruction Ic for the welding intensity is decreased or increased, the increment $\Delta Ic$ is subtracted from or added to Ic.

**16.** Method according to any one of claims 10 to 15, **characterised in that**, in order to construct the set of learning data, a succession of weld points are carried out, with the instruction Ic for the welding intensity being varied alternately between the lower limit and the upper limit of the weldability range and the welding electrodes being worn in this manner, the other instructions being kept constant.

**17.** Method according to any one of claims 1 to 16, **characterised in that** it is carried out by a computer.

**Fig. 1**

**Fig. 2**

**Fig. 3**

**Fig. 4**

**Fig. 5**

## Fig. 6